# EUROPEAN PATENT SPECIFICATION

(11) **EP 3 791 561 B1**
(45) Date of publication and mention of the grant of the patent: **06.09.2023**
(21) Application number: 19724325.6
(22) Date of filing: 03.05.2019
(51) Int. Cl.: H04L 69/40, H04L 67/10, G06F 11/14

(54) **ANCHOR SHORTENING ACROSS STREAMING NODES**
ANKERVERKÜRZUNG ÜBER STREAMING-KNOTEN HINWEG
RACCOURCISSEMENT D'ANCRAGE ENTRE DES NOEUDS DE DIFFUSION EN CONTINU

(30) Priority: 11.05.2018 US 201815977916
(43) Date of publication of application: 17.03.2021
(73) Proprietor: Microsoft Technology Licensing, LLC, Redmond, WA 98052-6399 (US)
(72) Inventor: ALPEROVICH, Alexander, Redmond, WA 98052-6399 (US); SHULMAN, Boris, Redmond, WA 98052-6399 (US); NOVIK, Lev, Redmond, WA 98052-6399 (US)
(74) Representative: Grünecker Patent- und Rechtsanwälte PartG mbB
(86) International application number: PCT/US2019/030505
(87) International publication number: WO 2019/217215

(56) References cited:
- US-A1- 2007 136 279
- US-A1- 2009 063 548
- US-A1- 2016 359 940
- US-A1- 2018 124 141
- US-B1- 7 251 747

## Description

### BACKGROUND

Event stream processing refers to the process of quickly analyzing time-based data, such as time series data. In the context of event stream processing, the term "event" refers to any occurrence that happens at a defined time and can be recorded using one or more data fields. An "event stream" is a sequence of multiple data events, which may be ordered by time. Some examples of different types of event streams include Internet of Things (IoT) data (e.g., sensor data, signals from control systems, location information), business transactions (e.g., customer orders, bank deposits, invoices), and information reports (e.g., social media updates, market data, weather reports).

With traditional approaches, data is typically processed after it has been stored. Advantageously, event stream processing allows data to be analyzed as it is being created and before it is stored. For example, data may be analyzed when it is streaming from one device to another. This allows for faster reaction time and may even provide an opportunity for proactive measures to be taken.

Event stream processing may be utilized to identify meaningful patterns or relationships within event streams in order to detect relationships like event correlation, causality, or timing. There are a wide variety of industries that can benefit from event stream processing, including network monitoring, cybersecurity, retail optimization, surveillance, fraud detection, financial trading, and e-commerce.

US 2003/131342 A1 discloses a method for event stream processing system including a versioned data structure layered over a log-structured store. A first address handle points to a first version of data in the versioned data structure. A stream of data updates from a data source create a second version of data in the versioned data structure, addressed using a second address handle.

US 2018/124141 discloses a stream hosting server that generates anchors associated with a live stream, each anchor specifying a timestamp of the live stream that represents an opportune moment for a user to join the live stream. When a viewer client device sends a request to join the live stream, the stream hosting server analyzes the anchor list and selects an appropriate anchor. The stream hosting server provides the live stream to the viewer client device beginning at the timestamp specified by the anchor.

It is the object of the present invention to provide an improved solution for anchor shortening across streaming nodes in event stream processing.

This object is solved by the subject matter of the independent claims.

Embodiments are defined in the dependent claims.

### BRIEF DESCRIPTION OF THE DRAWINGS

Figure 1 illustrates an example of an event stream processing (ESP) system that is configured to facilitate anchor remapping across streaming nodes in accordance with the present disclosure.
Figure 2A illustrates an example showing how an upstream marshaller within an ESP system may map a full anchor to an index anchor.
Figure 2B illustrates an example showing how the upstream marshaller may remap the index anchor back to the full anchor.
Figure 3 illustrates an example showing how the mapping techniques disclosed herein may limit the complexity of anchors within an ESP system.
Figure 4 illustrates aspects of an ESP system in which an upstream marshaller is connected to multiple downstream marshallers.
Figure 5 illustrates an example of a streaming node that includes multiple downstream marshallers, compute processors, and upstream marshallers.
Figure 6 illustrates an example of a method for facilitating anchor shortening across streaming nodes.
Figure 7 illustrates an example of a method for remapping in an ESP system that implements an anchor protocol, the method being performed to recover from failure of a downstream node.
Figure 8 illustrates certain components that may be included within a computer system.

### DETAILED DESCRIPTION

From time to time, one or more nodes in an ESP system may fail. Some ESP systems may simply skip any data that was missed due to node failure. However, it may be desirable for the node(s) in an ESP system to be able to resume processing from the point at which failure occurred.

One technique to recover from node failure without loss or duplication of results relies on the formation of anchors. In this context, the term "node" may refer to a single computing device or to a set of computing devices that collectively function to perform one or more tasks. An ESP system may include multiple nodes. The term "anchor" refers to a logical pointer into an event stream that allows processing within an ESP system to resume from a precise point. A general methodology for constructing systems of anchors is described in U.S. Patent Application No. 14/732,416, titled "Using Anchors for Reliable Stream Processing," filed on June 5, 2015, and assigned to the owner of the present application.

An anchor may take the form of metadata that is associated with a data batch. An anchor corresponding to a particular data batch may include an indication of a latest input point for every input that is used to generate the data batch. An anchor may also include some additional wrapping. In this context, the term "data batch" refers to a set of data that corresponds to one or more event streams. The term "input" refers to a source of an event stream (e.g., a sensor, a control system, a software application). The term "input point" refers to a particular point in one or more event streams corresponding to a data batch. An input point may be characterized in a variety of different ways. Some examples of input points include a file offset, a file identifier, and a time stamp.

As used herein, the terms "upstream" and "downstream" may be used to describe the flow of data in an ESP system. An ESP system may be configured so that a downstream entity pulls data from an upstream entity via a pull operation. As part of performing the pull operation, the downstream entity may reference a specific anchor corresponding to a particular data batch. The anchor indicates a point in the data that the response should come after.

More specifically, a downstream entity may send a request for a batch of data to an upstream entity. The request may reference a particular anchor. In response to the request, the upstream entity may return the requested batch of data, beginning at the point in the data corresponding to the specified anchor. The upstream entity may also return a new anchor. When the downstream entity makes a subsequent request for another batch of data from the upstream entity, the request may reference the new anchor.

Anchors may be nested, such that a particular anchor may include a reference to one or more other anchors. Consider a relatively simple example that involves three processing entities, which will be referred to as an input processor, a first compute processor, and a second compute processor. In this context, the term "input processor" refers to a processing entity that ingests one or more event streams from one or more inputs. The term "compute processor" refers to a processing entity that performs one or more processing operations on event stream(s).

Suppose that these processing entities are connected serially. Further suppose that the input processor ingests data from a data source, the first compute processor pulls data from the input processor, and the input processor returns anchor ai along with the requested data. Subsequently, when the second compute processor pulls data from the first compute processor, suppose that the first compute processor returns anchor a₂ along with the requested data. In this example, anchor a₂ may include a reference to anchor ai. Thus, anchor a₂ may be considered to be a nested anchor. More generally, as used herein, the term "nested anchor" refers to an anchor that includes a reference to at least one other anchor.

The previous example was relatively simple and involved just three processing entities. However, the overall structure (or topology) of an ESP system may be fairly complex. For example, an ESP system may include multiple nodes, and these nodes may be interconnected in various ways. Moreover, a single node may include multiple processing entities, which may also be interconnected in various ways.

The size of an anchor may grow exponentially with the number of processing entities that it covers. Thus, in an ESP system that has a complex processing topology, the size of anchors can grow quickly. In the simple example discussed above, anchor a₂ was a function of just one other anchor, namely anchor ai. But in an ESP system with a complex processing topology, an anchor could be a function of a very large number (e.g., thousands) of other anchors.

As anchors become larger and more complex, the value of using anchors may be diminished. At some point, the size of an anchor may become so large that problems may occur. For example, since ESP systems are memory intensive, the use of large anchors might exhaust the available supply of memory.

The present disclosure is generally related to facilitating anchor shortening across streaming nodes in an ESP system to support complex processing topologies. In accordance with the present disclosure, boundary entities may be provided within the nodes of an ESP system. These boundary entities may be referred to herein as "marshallers." Two different types of marshallers are described herein: downstream marshallers and upstream marshallers. In general terms, a marshaller is an entity that is configured to facilitate anchor mapping, as will be described in greater detail below. An upstream marshaller within a particular node may be configured to perform anchor mapping and remapping. A downstream marshaller within a particular node may pull data from an upstream marshaller in another node.

More specifically, when an upstream marshaller receives an anchor, the upstream marshaller may map the anchor to an index (e.g., a single numeric value). Instead of passing the anchor (which may be quite complex) to a downstream marshaller, the upstream marshaller may pass the index instead. This limits the complexity of anchors within an ESP system. The upstream marshaller may store mapping information, which may be any information that indicates the relationship between the anchor and the index. If the downstream node subsequently fails and the downstream marshaller requests a batch of data corresponding to the index, the upstream marshaller may use the mapping information to determine the original anchor.

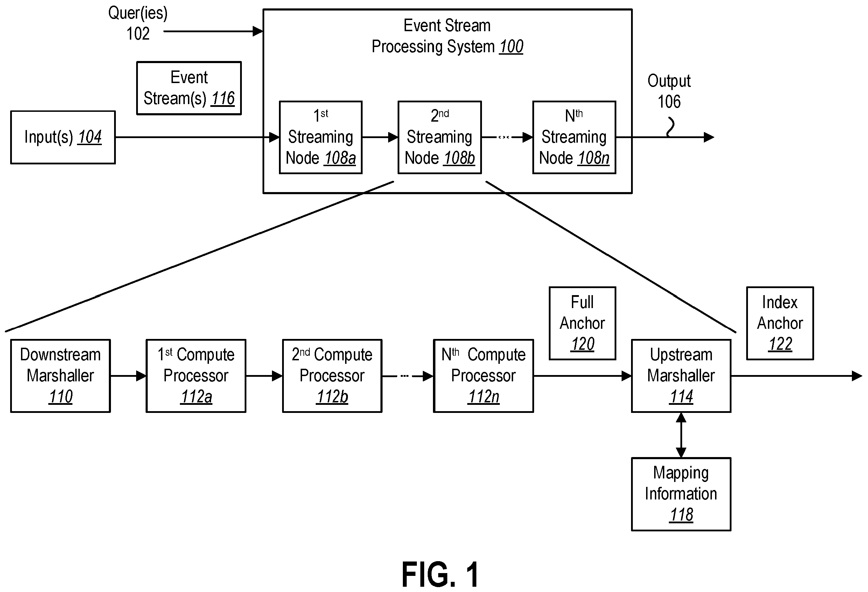

Figure 1 illustrates an example of an ESP system 100 that is configured to facilitate anchor shortening across streaming nodes 108a-n in accordance with the present disclosure. In response to one or more queries 102 (which may be provided as input from a user), the ESP system 100 may ingest one or more event streams 116 from one or more inputs 104, process the event stream(s) 116 in accordance with the quer(ies) 102, and generate output 106.

The ESP system 100 may include a plurality of streaming nodes 108a-n, including a first streaming node 108a, a second streaming node 108b, and an Nth streaming node 108n. Each of the streaming nodes 108a-n may be configured to perform one or more processing operations, and the streaming nodes 108a-n may be interconnected to implement the desired processing of the event stream(s) 116 ingested from the input(s) 104. For simplicity, the streaming nodes 108a-n are shown as being connected serially. However, the structure of the ESP system 100 shown in Figure 1 is provided for purposes of example only, and should not be interpreted as limiting the scope of the techniques disclosed herein. More complex topologies are possible in accordance with the present disclosure.

Figure 1 also shows some of the components that may be included in the second streaming node 108b, including a downstream marshaller 110, a plurality of compute processors 112a-n, and an upstream marshaller 114. The downstream marshaller 110 may be configured to pull data from an upstream marshaller (not shown) in the first streaming node 108a. The compute processors 112a-n may each be configured to perform one or more processing operations, and they may be interconnected in various ways to implement the desired processing of the event stream(s) 116. For simplicity, the compute processors 112a-n are shown as being connected serially. Again, however, more complex topologies are possible in accordance with the present disclosure.

The ESP system 100 may use anchors to facilitate recovery from node failure without loss or duplication of results. Anchors may be passed between various entities within the ESP system 100. For example, anchors may be passed between nodes (e.g., from the first streaming node 108a to the second streaming node 108b). Anchors may also be passed between compute processors within a single node (e.g., from the first compute processor 112a to the second compute processor 112b).

The size of an anchor may grow as it is passed along a chain of multiple processing entities, such as the chain of compute processors 112a-n. Figure 1 shows an anchor 120 being passed from the Nth compute processor 112n to the upstream marshaller 114.

Because the anchor 120 may be generated at the end of a chain of compute processors 112a-n, the anchor 120 may be fairly large and complex. The upstream marshaller 114 may be configured to map the (potentially complex) anchor 120 that it receives to a simple index 122, such as a single numeric value. The anchor 120 that the upstream marshaller 114 receives from the Nth compute processor 112n may be referred to as a full anchor 120, and the index 122 to which the full anchor 120 is mapped may be referred to herein as an index anchor 122. As used herein, the term "full anchor" refers to a complete representation of an anchor that has been mapped to a simpler representation, such as an index. The term "index anchor" refers to an index to which a full anchor has been mapped. The upstream marshaller 114 may pass the index anchor 122 to a downstream marshaller in a downstream node, instead of passing the full anchor 120 itself. In this way, the complexity of anchors within the ESP system 100 may be limited.

The upstream marshaller 114 may store mapping information 118 indicating the relationship between the full anchor 120 and the index anchor 122. If the upstream marshaller 114 subsequently receives a data request that references the index anchor 122 (in the event that a downstream node fails, for example), the upstream marshaller 114 may use the mapping information 118 to identify the full anchor 120 that corresponds to the index anchor 122.

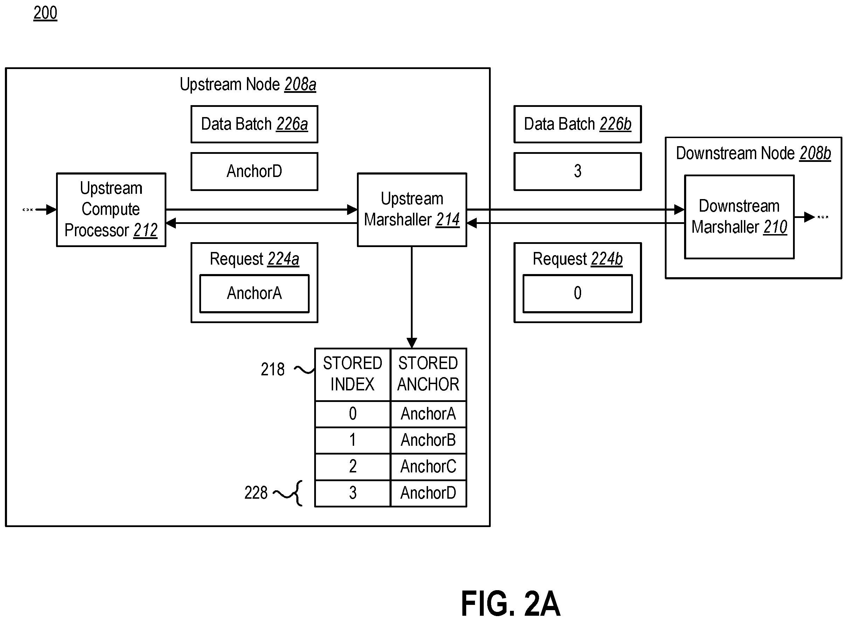

An example will be discussed in relation to Figures 2A-B. Reference is initially made to Figure 2A, which illustrates how an upstream marshaller 214 within an ESP system 200 may map a full anchor to an index anchor. The ESP system 200 may be configured so that downstream entities pull data from upstream entities. For example, the upstream marshaller 214 may be configured to pull a data batch 226a from an upstream compute processor 212 by sending a request 224a for the data batch 226a to the upstream compute processor 212. (In this context, the term "upstream compute processor" refers to a compute processor that is upstream from another processing entity. In Figures 2A-B, the upstream compute processor 212 is upstream from the upstream marshaller 214.) The request 224a may reference a particular anchor (e.g., AnchorA), which may indicate a point in one or more event streams 116 where the data batch 226a should begin.

In response to the request 224a, the upstream compute processor 212 may provide the requested data batch 226a. In addition to providing the requested data batch 226a, the upstream compute processor 212 may also provide the upstream marshaller 214 with a new anchor (e.g., AnchorD). The new anchor may indicate one or more end points corresponding to the data batch 226a. When the upstream marshaller 214 makes a subsequent request (not shown) for data from the upstream compute processor 212, the subsequent request may reference this new anchor (AnchorD) to indicate where the newly requested data should begin.

The upstream compute processor 212 may be at the end of a long chain of processing entities (such as the chain of compute processors 112a-n shown in Figure 1), and as a result AnchorD may be fairly complex. For example, AnchorD may be a nested anchor that includes a reference to one or more other anchors. To simplify downstream processing, the upstream marshaller 214 may map AnchorD to a simple index, which may be a single numeric value (e.g., 3). The upstream marshaller 214 may also store mapping information indicating the relationship between AnchorD and the corresponding index anchor in a table 218. The table 218 may include multiple records 228. Each record 228 may include a stored index anchor (e.g., 3) and a corresponding stored full anchor (e.g., AnchorD).

An anchor protocol may be designed so that different anchors created by the same processing entity may be compared in order to determine their relative order. For instance, different anchors created by the upstream compute processor 212 (e.g., AnchorA and AnchorD) may be compared to determine which has a greater value. As a result of this comparison, a determination may be made about the relative order of the anchors being compared. For example, a determination may be made that AnchorD has a greater value than AnchorA. This may indicate that the point in the event stream(s) 116 corresponding to AnchorD occurs after the point in the event stream(s) 116 corresponding to AnchorA.

The ESP system 200 may be configured so that when an upstream marshaller 214 creates index anchors, the ability to compare different full anchors is preserved. In other words, the ESP system 200 may be configured so that the value of a first index anchor is greater than the value of a second index anchor if and only if the value of the full anchor corresponding to the first index anchor is greater than the value of the full anchor corresponding to the second index anchor. Thus, the properties of full anchors that permit the full anchors to be compared with one another may be preserved in the index anchors that are created.

To preserve the ability to compare different anchors, the upstream marshaller 214 may be configured to create new index anchors in sequential order. Referring again to the example depicted in Figure 2A, suppose that AnchorB has a greater value than AnchorA, AnchorC has a greater value than AnchorB, and so forth. By creating new index anchors in sequential order, the index anchors preserve the relative values of the full anchors. In other words, the index anchor corresponding to AnchorB (which is 1) has a greater value than the index anchor corresponding to AnchorA (which is 0). Similarly, the index anchor corresponding to AnchorC (which is 2) has a greater value than the index anchor corresponding to AnchorB (which is 1), and so forth.

An ESP system in accordance with the present disclosure may be configured so that the ability to compare anchors is preserved even if anchor mapping is performed multiple times. For example, referring briefly to the ESP system 100 shown in Figure 1, suppose that upstream marshallers in multiple streaming nodes 108a-n perform anchor mapping as disclosed herein (e.g., the index anchor 122 created by the upstream marshaller 114 is passed to a subsequent streaming node and additional mapping is performed by a subsequent upstream marshaller). In accordance with the present disclosure, the ability to compare anchors may be preserved even in this type of scenario. Thus, an ESP system may be configured so that anchor mapping as disclosed herein does not affect the ability to compare anchors.

Referring again to the example shown in Figure 2A, in order to determine the index anchor to which AnchorD should be mapped, the upstream marshaller 214 may determine the index anchor that was issued most recently. This information may be determined from the table 218. Then, the upstream marshaller 214 may increment the value of the most recently issued index anchor. In the depicted example, it will be assumed that the most recently issued index anchor is the number 2. Thus, in this example the upstream marshaller 214 may determine the index anchor to which AnchorD should be mapped by incrementing the number 2, thereby obtaining the number 3.

At some subsequent point in time, a downstream marshaller 210 in a downstream node 208b may pull a data batch 226b from the upstream marshaller 214 by sending a request 224b to the upstream marshaller 214. The request 224b may reference a particular index anchor (e.g., 0), which may indicate a point in one or more event streams 116 where the data batch 226b should begin.

In response to the request 224b, the upstream marshaller 214 may provide the requested data batch 226b along with a new index anchor (e.g., 3). The new index anchor may correspond to the most recent full anchor (AnchorD) that the upstream marshaller 214 has received from the upstream compute processor 212. However, instead of providing the full anchor (AnchorD) along with the requested data batch 226b, the upstream marshaller 214 may instead provide the index anchor (3) to which the full anchor has been mapped. In other words, the upstream marshaller 214 may pass the index anchor as a new anchor to the downstream marshaller 210.

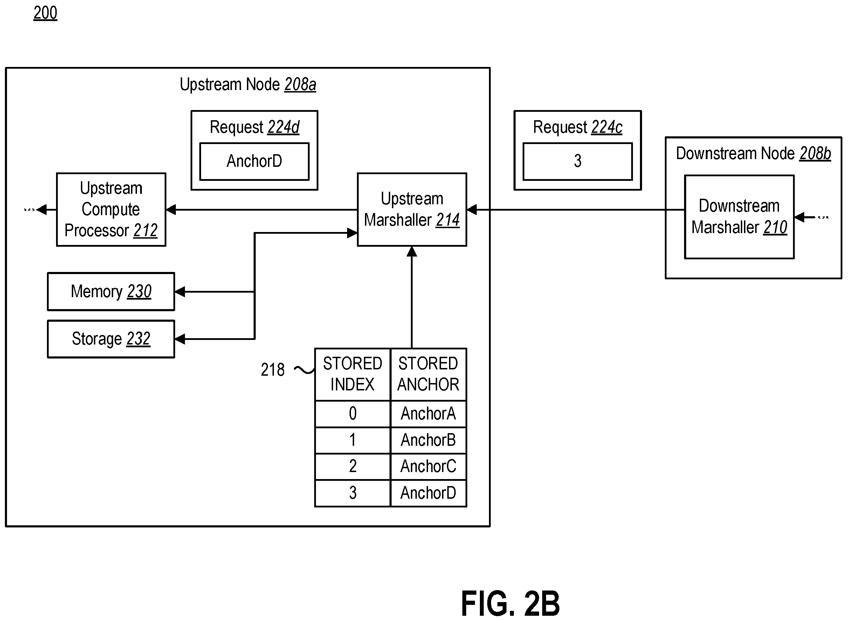

Reference is now made to Figure 2B, which illustrates how the upstream marshaller 214 may remap the index anchor (3) back to the full anchor (AnchorD) under some circumstances. If, for example, the downstream node 208b (or another node that is farther downstream) fails, the downstream marshaller 210 may send a request 224c for the upstream marshaller 214 to resend data that the upstream marshaller 214 previously sent. The request 224c may include a reference to the index anchor (3) indicating the point in one or more event streams 116 where the upstream marshaller 214 should begin resending the data.

In response to receiving the request 224c, the upstream marshaller 214 may use the mapping information that is stored in the table 218 to determine the full anchor (AnchorD) that corresponds to the index anchor (3) in the request 224c. The upstream marshaller 214 may then pass the full anchor (AnchorD) to the upstream compute processor 212 by including the full anchor in a request 224d that the upstream marshaller 214 sends to the upstream compute processor 212.

In some implementations, the upstream marshaller 214 may be configured so that it determines whether the data requested by the downstream marshaller 210 is stored locally before requesting the data from the upstream compute processor 212. For example, the upstream marshaller 214 may determine whether the requested data is stored in local memory 230. If the requested data is not stored in local memory 230, the upstream marshaller 214 may determine whether the requested data is stored in local storage 232. If the requested data is not stored in local storage 232, the upstream marshaller 214 may send the request 224d for the data to the upstream compute processor 212. Thus, the upstream marshaller 214 may be configured so that it passes the full anchor (AnchorD) to the upstream compute processor 212 in response to determining that the data requested by the downstream marshaller 210 is not stored locally.

The local memory 230 and the local storage 232 may be part of the upstream node 208a. For example, the upstream node 208a may be a computing device, and the local memory 230 and the local storage 232 may be part of that computing device. In other words, it may not be necessary to use a network interface to access the local memory 230 and the local storage 232.

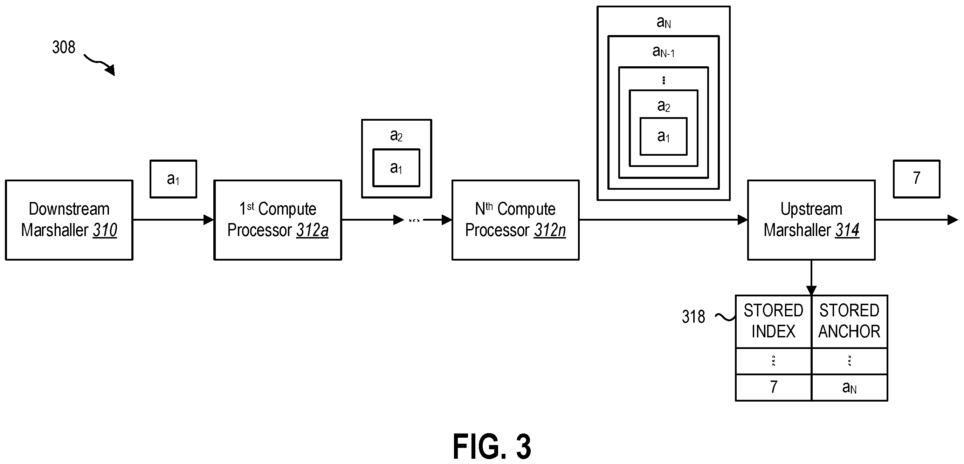

Figure 3 illustrates how the mapping techniques disclosed herein may limit the complexity of anchors within an ESP system. Anchors ai through a_{N} are shown growing in complexity as they move down a chain of compute processors 312a-n in a streaming node 308. An upstream marshaller 314 may then map the full anchor arr (which is a nested anchor that includes references to anchors ai ... a_{N-1}) to a simple index anchor such as a single numeric value (e.g., 7).

More specifically, a downstream marshaller 310 within the streaming node 308 may pull data from an upstream node (not shown). When the first compute processor 312a pulls the data from the downstream marshaller 310, the downstream marshaller 310 may provide an anchor ai to the first compute processor 312a. When a second compute processor (not shown) pulls data from the first compute processor 312a, the first compute processor 312a may provide an anchor a₂ to the second compute processor. The anchor a₂ may include a reference to the anchor ai that the first compute processor 312a received from the downstream marshaller 310.

This pattern of creating a new anchor that references the previously received anchor(s) may continue, such that the anchors grow in complexity as they move down the chain of compute processors 312a-n. Figure 3 shows the Nth compute processor 312n providing an anchor arr to the upstream marshaller 314. Anchor arr includes a reference to anchors ai through a_{N-1}.

To simplify downstream processing, the upstream marshaller 314 may map the full anchor arr to a simple index anchor, which may be a single numeric value (e.g., 7). The upstream marshaller 314 may also store mapping information in a table 318 indicating the relationship between the full anchor arr and the corresponding index anchor.

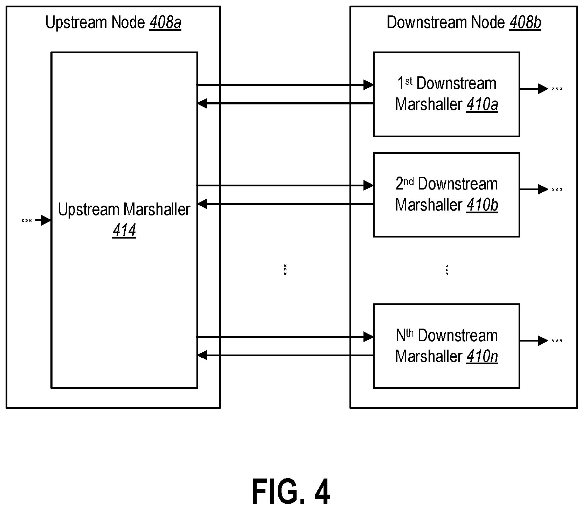

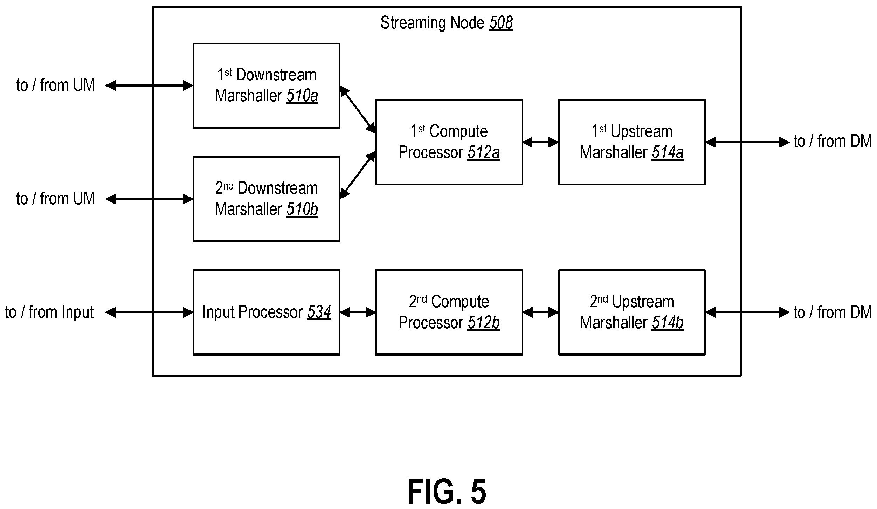

Although the examples of ESP systems discussed above have been fairly simple, more complex topologies are possible. Figures 4 and 5 show some additional aspects of topologies that may be utilized by an ESP system.

Figure 4 shows an upstream marshaller 414 connected to multiple downstream marshallers 410a-n. Each of the downstream marshallers 410a-n may be configured to pull data from the upstream marshaller 414. When the downstream marshallers 410a-n request data from the upstream marshaller 414, the upstream marshaller 414 may provide an index anchor corresponding to a more complex full anchor, in the manner discussed above.

Figure 4 shows the upstream marshaller 414 on an upstream node 408a and the downstream marshallers 410a-n on a single downstream node 408b. Alternatively, the downstream marshallers 410a-n may be implemented on different nodes.

Figure 5 shows a streaming node 508 that includes multiple downstream marshallers 510a-b, compute processors 512a-b, and upstream marshallers 514a-b. The streaming node 508 also includes an input processor 534.

The downstream marshallers 510a-b may be configured to pull data from an upstream marshaller in an upstream node (not shown). The first compute processor 512a may be configured to pull data from the downstream marshallers 510a-b. The first upstream marshaller 514a may be configured to pull data from a first compute processor 512a. A downstream marshaller in a downstream node (not shown) may be configured to pull data from the first upstream marshaller 514a.

The input processor 534 may be configured to pull data from an input (not shown). The second compute processor 512b may be configured to pull data from the input processor 534. The second upstream marshaller 514b may be configured to pull data from the second compute processor 512b.

When data is passed from one entity to another, an anchor may be provided. Each of the upstream marshallers 514a-b may be configured to map a full anchor to an index anchor, in the manner discussed above.

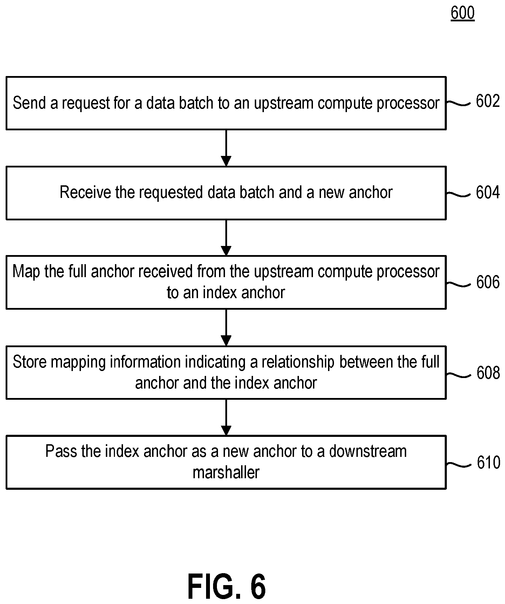

Figure 6 illustrates an example of a method 600 for facilitating anchor shortening across streaming nodes in an ESP system. The method 600 will be described in relation to the ESP system 200 shown in Figures 2A-B. The method 600 may be implemented by an upstream marshaller 214 within the ESP system 200.

The method 600 may include sending 602 a request 224a for a data batch 226a to an upstream compute processor 212. The request 224a may include a reference to a particular anchor that indicates the point in one or more event streams 116 where the requested data batch 226a should begin. In response to the request 224a, the upstream marshaller 214 may receive 604 the requested data batch 226a along with a new anchor.

To simplify downstream processing, the upstream marshaller 214 may map 606 the full anchor received from the upstream compute processor 212 to an index anchor, which may be a single numeric value. The upstream marshaller 214 may also store 608 mapping information indicating the relationship between the full anchor and the index anchor. The mapping information may be stored 608 in a table 218, for example. At some subsequent point in time, the upstream marshaller 214 may pass 610 the index anchor as a new anchor to a downstream entity, such as a downstream marshaller 210. For example, when a downstream marshaller 210 sends a request 224b to the upstream marshaller 214 for a data batch 226b, the upstream marshaller 214 may provide the requested data batch 226b along with the index anchor.

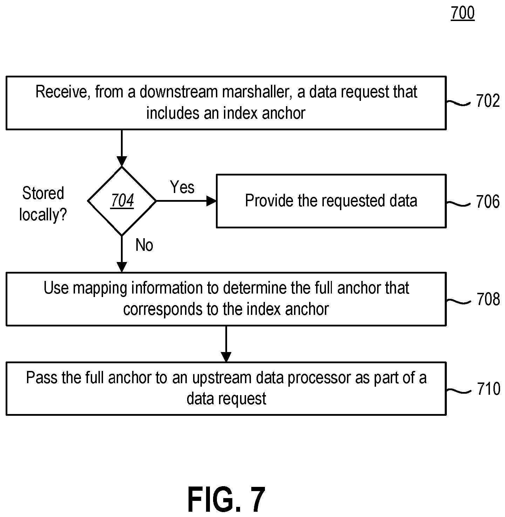

Figure 7 illustrates an example of a method 700 for remapping in an ESP system that implements an anchor protocol. The method 700 will be described in relation to the ESP system 200 shown in Figures 2A-B. The method 700 may be implemented by an upstream marshaller 214 within the ESP system 200.

The upstream marshaller 214 may receive 702, from a downstream entity such as a downstream marshaller 210, a request 224c to resend data that the upstream marshaller 214 previously sent. The downstream marshaller 210 may send such a request 224c in response to failure of a downstream node (such as the downstream node 208b that includes the downstream marshaller 210, or another node that is farther downstream). The request 224c may include a reference to an index anchor that the upstream marshaller 214 previously provided to the downstream marshaller 210.

In response to receiving 702 the request 224c, the upstream marshaller 214 may determine 704 whether the requested data is stored locally. If it is, the upstream marshaller 214 may provide 706 the requested data.

If, however, the requested data is not stored locally, the upstream marshaller 214 may use mapping information to determine 708 the full anchor that corresponds to the index anchor in the request 224c. In other words, the upstream marshaller 214 may remap the index anchor to the full anchor. The upstream marshaller 214 may then pass 710 the full anchor to the upstream compute processor 212 by including the full anchor in a request 224d that the upstream marshaller 214 sends to the upstream compute processor 212.

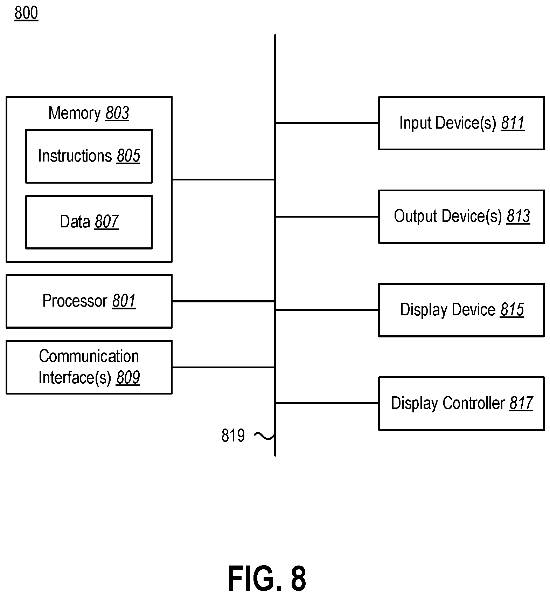

Figure 8 illustrates certain components that may be included within a computer system 800. One or more computer systems 800 may be used to implement the various devices, components, and systems described herein, including the ESP systems 100, 200 and the streaming nodes 108a-n, 208a-b, 308, 408, 508.

The computer system 800 includes a processor 801. The processor 801 may be a general purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 801 may be referred to as a central processing unit (CPU). Although just a single processor 801 is shown in the computer system 800 of Figure 8, in an alternative configuration, a combination of processors (e.g., an ARM and DSP) could be used.

The computer system 800 also includes memory 803. The memory 803 may be any electronic component capable of storing electronic information. For example, the memory 803 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, and so forth, including combinations thereof.

Instructions 805 and data 807 may be stored in the memory 803. The instructions 805 may be executable by the processor 801 to implement some or all of the methods disclosed herein, such as the methods 600, 700 shown in Figures 6 and 7. Executing the instructions 805 may involve the use of the data 807 that is stored in the memory 803. Any of the various examples of modules and components described herein may be implemented, partially or wholly, as instructions 805 stored in memory 803 and executed by the processor 801. Any of the various examples of data described herein may be among the data 807 that is stored in memory 803 and used during execution of the instructions 805 by the processor 801.

A computer system 800 may also include one or more communication interfaces 809 for communicating with other electronic devices. The communication interface(s) 809 may be based on wired communication technology, wireless communication technology, or both. Some examples of communication interfaces 809 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 800 may also include one or more input devices 811 and one or more output devices 813. Some examples of input devices 811 include a keyboard, mouse, microphone, remote control device, button, joystick, trackball, touchpad, and lightpen. Some examples of output devices 813 include a speaker and a printer. One specific type of output device that is typically included in a computer system 800 is a display device 815. Display devices 815 used with embodiments disclosed herein may utilize any suitable image projection technology, such as liquid crystal display (LCD), light-emitting diode (LED), gas plasma, electroluminescence, or the like. A display controller 817 may also be provided, for converting data 807 stored in the memory 803 into text, graphics, and/or moving images (as appropriate) shown on the display device 815.

The various components of the computer system 800 may be coupled together by one or more buses, which may include a power bus, a control signal bus, a status signal bus, a data bus, etc. For the sake of clarity, the various buses are illustrated in Figure 8 as a bus system 819.

In accordance with an aspect of the present disclosure, a method is disclosed for facilitating anchor shortening across streaming nodes in an event stream processing system. The method may include receiving a full anchor at an upstream marshaller. The full anchor may be associated with a data batch that corresponds to one or more event streams. The full anchor may include an indication of an input point for the one or more event streams. The full anchor may be received from an upstream compute processor. The method may also include mapping the full anchor to an index anchor and passing the index anchor to a downstream marshaller.

The full anchor may be a nested anchor that includes a reference to at least one other anchor.

The method may further include creating index anchors in sequential order, such that properties of full anchors that permit the full anchors to be compared with one another are preserved in the index anchors.

The method may further include storing mapping information indicating a relationship between the full anchor and the index anchor. The mapping information may be stored in a table having a plurality of records. Each record may include a stored index anchor and a corresponding stored full anchor.

The full anchor may be received at the upstream marshaller in response to a data request from the upstream marshaller. The method may further include receiving a requested data batch at the upstream marshaller.

The index anchor may be passed to the downstream marshaller in response to a data request from the downstream marshaller. The method may further include sending requested data to the downstream marshaller with the index anchor.

An upstream node may include the upstream marshaller. A downstream node may include the downstream marshaller. The upstream node and the downstream node may include separate computing devices.

In accordance with another aspect of the present disclosure, a method is disclosed for remapping in an event stream processing system that implements an anchor protocol. The method may include receiving an index anchor at an upstream marshaller. The index anchor may be received from a downstream marshaller. The index anchor may correspond to a full anchor that the upstream marshaller previously received from an upstream compute processor. The full anchor may be associated with a data batch that corresponds to one or more event streams. The full anchor may include an indication of an input point for the one or more event streams. The method may include using mapping information to determine the full anchor that corresponds to the index anchor, and passing the full anchor to the upstream compute processor.

The index anchor may be received in response to failure of a downstream node.

The full anchor may be a nested anchor that includes a reference to at least one other anchor.

The index anchor may be received at the upstream marshaller with a data request. The method may further include determining whether a requested data batch is stored locally. The full anchor may be passed to the upstream compute processor in response to determining that the requested data batch is not stored locally.

An upstream node may include the upstream marshaller. A downstream node may include the downstream marshaller. The upstream node and the downstream node may include separate computing devices.

In accordance with another aspect of the present disclosure, an event stream processing system may be configured to facilitate anchor shortening across streaming nodes. The event stream processing system may include a downstream marshaller, an upstream compute processor, and an upstream marshaller that is configured to receive a full anchor from the upstream compute processor. The full anchor may be associated with a data batch that corresponds to one or more event streams. The full anchor may include an indication of an input point for the one or more event streams. The upstream marshaller may be additionally configured to map the full anchor to an index anchor and pass the index anchor to the downstream marshaller.

The full anchor may be a nested anchor that includes a reference to at least one other anchor.

The upstream marshaller may be additionally configured to receive the index anchor from the downstream marshaller, use mapping information to determine the full anchor that corresponds to the index anchor, and pass the full anchor to the upstream compute processor.

The upstream marshaller may receive the index anchor with a data request. The upstream marshaller may be additionally configured to determine whether a requested data batch is stored locally. The upstream marshaller may pass the full anchor to the upstream compute processor in response to determining that the requested data batch is not stored locally.

The upstream marshaller may be configured to create index anchors in sequential order, such that properties of full anchors that permit the full anchors to be compared with one another are preserved in the index anchors.

The upstream marshaller may be additionally configured to store mapping information indicating a relationship between the full anchor and the index anchor.

The upstream marshaller may receive the full anchor from the upstream compute processor in response to a data request from the upstream marshaller. The upstream marshaller may be additionally configured to receive a requested data batch with the full anchor.

The upstream marshaller may pass the index anchor to the downstream marshaller in response to a data request from the downstream marshaller. The upstream marshaller may be additionally configured to send requested data to the downstream marshaller with the index anchor.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

The present disclosure may be embodied in other specific forms without departing from its characteristics. The described embodiments are to be considered as illustrative and not restrictive. The scope of the disclosure is, therefore, indicated by the appended claims rather than by the foregoing description. Changes that come within the meaning of the claims are to be embraced within their scope.

## Claims

1. A method for facilitating anchor (120) shortening across streaming nodes (108a-n) in an event stream (116) processing system (100), comprising:
receiving a full anchor (120) at an upstream marshaller (114), the full anchor being associated with a data batch (226a) that corresponds to one or more event streams, the full anchor comprising an indication of an input point for the one or more event streams (116), the full anchor being received from an upstream compute processor (212);
mapping, by the upstream marshaller, the full anchor to an index anchor; and
passing (610) the index anchor to a downstream marshaller (110).

2. The method of claim 1, wherein the full anchor is a nested anchor that comprises a reference to at least one other anchor.

3. The method of claim 1, further comprising creating index anchors in sequential order, such that properties of full anchors that permit the full anchors to be compared with one another are preserved in the index anchors.

4. The method of claim 1, further comprising storing mapping information indicating a relationship between the full anchor and the index anchor, the mapping information being stored in a table having a plurality of records (228), each record comprising a stored index anchor and a corresponding stored full anchor.

5. The method of claim 1, wherein:
the full anchor is received at the upstream marshaller in response to a data request from the upstream marshaller; and
the method further comprises receiving a requested data batch at the upstream marshaller.

6. The method of claim 1, wherein:
the index anchor is passed to the downstream marshaller in response to a data request from the downstream marshaller; and
the method further comprises sending requested data to the downstream marshaller with the index anchor.

7. The method of claim 1, wherein:
an upstream node (208a) comprises the upstream marshaller;
a downstream node (208b) comprises the downstream marshaller; and
the upstream node and the downstream node comprise separate computing devices.

8. An event stream processing system configured to facilitate anchor (120) shortening across streaming nodes (108a-n), comprising:
a downstream marshaller (110);
an upstream compute processor (212); and
an upstream marshaller (114) that is configured to receive a full anchor (120) from the upstream compute processor, the full anchor being associated with a data batch (226a) that corresponds to one or more event streams (116), the full anchor comprising an indication of an input point for the one or more event streams, the upstream marshaller being additionally configured to map the full anchor to an index anchor and pass the index anchor to the downstream marshaller.

9. The event stream processing system of claim 8, wherein the full anchor is a nested anchor that comprises a reference to at least one other anchor.

10. The event stream processing system of claim 8, wherein the upstream marshaller is additionally configured to:
receive the index anchor from the downstream marshaller;
use mapping information to determine the full anchor that corresponds to the index anchor; and
pass the full anchor to the upstream compute processor.

11. The event stream processing system of claim 10, wherein:
the upstream marshaller receives the index anchor with a data request;
the upstream marshaller is additionally configured to determine whether a requested data batch is stored locally; and
the upstream marshaller passes the full anchor to the upstream compute processor in response to determining that the requested data batch is not stored locally.

12. The event stream processing system of claim 8, wherein the upstream marshaller is configured to create index anchors in sequential order, such that properties of full anchors that permit the full anchors to be compared with one another are preserved in the index anchors.

13. The event stream processing system of claim 8, wherein the upstream marshaller is additionally configured to store mapping information indicating a relationship between the full anchor and the index anchor.

14. The event stream processing system of claim 8, wherein:
the upstream marshaller receives the full anchor from the upstream compute processor in response to a data request from the upstream marshaller; and
the upstream marshaller is additionally configured to receive a requested data batch with the full anchor.

15. The event stream processing system of claim 8, wherein:
the upstream marshaller passes the index anchor to the downstream marshaller in response to a data request from the downstream marshaller; and
the upstream marshaller is additionally configured to send requested data to the downstream marshaller with the index anchor.

## Patentansprüche

1. Verfahren zum Erleichtern von Verkürzung eines Ankers (120) über Streaming-Knoten (108a-n) hinweg in einem Verarbeitungssystem (100) für Ereignis-Streams (116), umfassend:
Empfangen eines kompletten Ankers (120) an einem Marshaller stromaufwärts (114), wobei der komplette Anker einem Datenstapel (226a) zugeordnet ist, der einem oder mehreren Ereignis-Streams entspricht, wobei der komplette Anker eine Angabe eines Eingabepunkts für den einen oder die mehreren Ereignis-Streams (116) umfasst, wobei der kompletten Anker von einem Rechenprozessor (212) stromaufwärts empfangen wird;
Mapping des kompletten Ankers durch den Marshaller stromaufwärts zu einem Indexanker; und
Weitergeben (610) des Indexankers an einen Marshaller stromabwärts (110).

2. Verfahren nach Anspruch 1, wobei der komplette Anker ein verschachtelter Anker ist, der eine Referenz zu mindestens einem anderen Anker umfasst.

3. Verfahren nach Anspruch 1, weiter umfassend Erstellen von Indexankern in aufeinanderfolgender Reihenfolge, so dass die Eigenschaften der kompletten Anker, die es zulassen, die kompletten Anker miteinander zu vergleichen, in den Indexankern erhalten werden.

4. Verfahren nach Anspruch 1, weiter umfassend Speichern von Mapping-Informationen, die eine Beziehung zwischen dem kompletten Anker und dem Indexanker angeben, wobei die Mapping-Informationen in einer Tabelle gespeichert werden, die eine Vielzahl von Einträgen (228) aufweist, wobei jeder Eintrag einen gespeicherten Indexanker und einen entsprechenden gespeicherten kompletten Anker umfasst.

5. Verfahren nach Anspruch 1, wobei:
der komplette Anker als Antwort auf eine Datenanfrage von dem Marshaller stromaufwärts an dem Marshaller stromaufwärts empfangen wird; und
das Verfahren weiter Empfangen eines angefragten Datenstapels an dem Marshaller stromaufwärts umfasst.

6. Verfahren nach Anspruch 1, wobei:
der Indexanker als Antwort auf eine Datenanfrage von dem Marshaller stromabwärts an den Marshaller stromabwärts weitergegeben wird; und
das Verfahren weiter Senden von angefragten Daten an den Marshaller stromabwärts mit dem Indexanker umfasst.

7. Verfahren nach Anspruch 1, wobei:
ein Knoten stromaufwärts (208a) den Marshaller stromaufwärts umfasst;
ein Knoten stromabwärts (208b) den Marshaller stromabwärts umfasst; und
der Knoten stromaufwärts und der Knoten stromabwärts getrennte Rechenvorrichtungen umfassen.

8. Ereignis-Stream-Verarbeitungssystem, das konfiguriert ist, um Verkürzung eines Ankers (120) über Streaming-Knoten (108a-n) hinweg zu erleichtern, umfassend:
einen Marshaller stromabwärts (110);
einen Rechenprozessor (212) stromaufwärts; und
einen Marshaller stromaufwärts (114), der konfiguriert ist, um einen kompletten Anker (120) von dem Rechenprozessor stromaufwärts zu empfangen, wobei der komplette Anker einem Datenstapel (226a) zugeordnet ist, der einem oder mehreren Ereignis-Streams (116) entspricht, wobei der komplette Anker eine Angabe eines Eingabepunkts für den einen oder die mehreren Ereignis-Streams umfasst, wobei der Marshaller stromaufwärts zusätzlich konfiguriert ist, um den kompletten Anker zu einem Indexanker zu mappen und den Indexanker an den Marshaller stromabwärts weiterzuleiten.

9. Ereignis-Stream-Verarbeitungssystem nach Anspruch 8, wobei der komplette Anker ein verschachtelter Anker ist, der eine Referenz zu mindestens einem anderen Anker umfasst.

10. Ereignis-Stream-Verarbeitungssystem nach Anspruch 8, wobei der Marshaller stromaufwärts zusätzlich konfiguriert ist, um:
den Indexanker von dem Marshaller stromabwärts zu empfangen;
Mapping-Informationen zu verwenden, um den kompletten Anker zu bestimmen, der dem Indexanker entspricht; und
den kompletten Anker an den Rechenprozessor stromaufwärts weiterzugeben.

11. Ereignis-Stream-Verarbeitungssystem nach Anspruch 10, wobei:
der Marshaller stromaufwärts den Indexanker mit einer Datenanfrage empfängt;
der Marshaller stromaufwärts zusätzlich konfiguriert ist, um zu bestimmen, ob ein angefragter Datenstapel lokal gespeichert ist; und
der Marshaller stromaufwärts den kompletten Anker als Antwort auf Bestimmen, dass der angefragte Datenstapel nicht lokal gespeichert ist, an den Rechenprozessor stromaufwärts weitergibt.

12. Ereignis-Stream-Verarbeitungssystem nach Anspruch 8, wobei der Marshaller stromaufwärts konfiguriert ist, um Indexanker in aufeinanderfolgender Reihenfolge zu erstellen, so dass die Eigenschaften von kompletten Ankern, die es zulassen, die kompletten Anker miteinander zu vergleichen, in den Indexankern erhalten werden.

13. Ereignis-Stream-Verarbeitungssystem nach Anspruch 8, wobei der Marshaller stromaufwärts zusätzlich konfiguriert ist, um Mapping-Informationen zu speichern, die eine Beziehung zwischen dem kompletten Anker und dem Indexanker angeben.

14. Ereignis-Stream-Verarbeitungssystem nach Anspruch 8, wobei:
der Marshaller stromaufwärts den kompletten Anker von dem Rechenprozessor stromaufwärts als Antwort auf eine Datenanfrage von dem Marshaller stromaufwärts empfängt; und
der Marshaller stromaufwärts zusätzlich konfiguriert ist, um einen angefragten Datenstapel mit dem kompletten Anker zu empfangen.

15. Ereignis-Stream-Verarbeitungssystem nach Anspruch 8, wobei:
der Marshaller stromaufwärts den Indexanker als Antwort auf eine Datenanfrage von dem Marshaller stromabwärts an den Marshaller stromabwärts weitergibt; und
der Marshaller stromaufwärts zusätzlich konfiguriert ist, um angefragte Daten an den Marshaller stromabwärts mit dem Indexanker zu senden.

## Revendications

1. Procédé pour faciliter le raccourcissement d'ancrage (120) à travers des noeuds de diffusion en continu (108a-n) dans un système de traitement (100) de flux d'événements (116), comprenant les étapes consistant à :
recevoir un ancrage complet (120) au niveau d'un dispositif de marshalling en amont (114), l'ancrage complet étant associé à un lot de données (226a) qui correspond à un ou plusieurs flux d'événements, l'ancrage complet comprenant une indication d'un point d'entrée pour les un ou plusieurs flux d'événements (116), l'ancrage complet étant reçu en provenance d'un processeur de calcul en amont (212) ;
mapper, par le dispositif de marshalling en amont, l'ancrage complet sur un ancrage d'index ; et
transmettre (610) l'ancrage d'index à un dispositif de marshalling en aval (110).

2. Procédé selon la revendication 1, dans lequel l'ancrage complet est un ancrage imbriqué qui comprend une référence à au moins un autre ancrage.

3. Procédé selon la revendication 1, comprenant en outre l'étape consistant à créer des ancrages d'index dans un ordre séquentiel, de sorte que des propriétés d'ancrages complets qui permettent de comparer les ancrages complets entre eux sont préservées dans les ancrages d'index.

4. Procédé selon la revendication 1, comprenant en outre l'étape consistant à stocker des informations de mappage indiquant une relation entre l'ancrage complet et l'ancrage d'index, les informations de mappage étant stockées dans une table présentant une pluralité d'enregistrements (228), chaque enregistrement comprenant un ancrage d'index stocké et un ancrage complet stocké correspondant.

5. Procédé selon la revendication 1, dans lequel :
l'ancrage complet est reçu au niveau du dispositif de marshalling en amont en réponse à une demande de données provenant du dispositif de marshalling en amont ; et
le procédé comprend en outre l'étape consistant à recevoir un lot de données demandé au niveau du dispositif de marshalling en amont.

6. Procédé selon la revendication 1, dans lequel :
l'ancrage d'index est transmis au dispositif de marshalling en aval en réponse à une demande de données provenant du dispositif de marshalling en aval ; et
le procédé comprend en outre l'étape consistant à envoyer des données demandées au dispositif de marshalling en aval avec l'ancrage d'index.

7. Procédé selon la revendication 1, dans lequel :
un noeud en amont (208a) comprend le dispositif de marshalling en amont ;
un noeud en aval (208b) comprend le dispositif de marshalling en aval ; et
le noeud en amont et le noeud en aval comprennent des dispositifs de calcul séparés.

8. Système de traitement de flux d'événements configuré pour faciliter le raccourcissement d'ancrage (120) à travers des noeuds de diffusion en continu (108a-n), comprenant :
un dispositif de marshalling en aval (110) ;
un processeur de calcul en amont (212) ; et
un dispositif de marshalling en amont (114) qui est configuré pour recevoir un ancrage complet (120) du processeur de calcul en amont, l'ancrage complet étant associé à un lot de données (226a) qui correspond à un ou plusieurs flux d'événements (116), l'ancrage complet comprenant une indication d'un point d'entrée pour les un ou plusieurs flux d'événements, le dispositif de marshalling en amont étant en outre configuré pour mapper l'ancrage complet à un ancrage d'index et transmettre l'ancrage d'index au dispositif de marshalling en aval.

9. Système de traitement de flux d'événements selon la revendication 8, dans lequel l'ancrage complet est un ancrage imbriqué qui comprend une référence à au moins un autre ancrage.

10. Système de traitement de flux d'événements selon la revendication 8, dans lequel le dispositif de marshalling en amont est en outre configuré pour :
recevoir l'ancrage d'index de la part du dispositif de marshalling en aval ;
utiliser des informations de mappage pour déterminer l'ancrage complet qui correspond à l'ancrage d'index ; et
transmettre l'ancrage complet au processeur de calcul en amont.

11. Système de traitement de flux d'événements selon la revendication 10, dans lequel :
le dispositif de marshalling en amont reçoit l'ancrage d'index avec une demande de données;
le dispositif de marshalling en amont est en outre configuré pour déterminer si un lot de données demandé est stocké localement ; et
le dispositif de marshalling en amont transmet l'ancrage complet au processeur de calcul en amont en réponse à la détermination que le lot de données demandé n'est pas stocké localement.

12. Système de traitement de flux d'événements selon la revendication 8, dans lequel le dispositif de marshalling en amont est configuré pour créer des ancrages d'index dans un ordre séquentiel, de sorte que des propriétés d'ancrages complets qui permettent de comparer les ancrages complets entre eux sont préservées dans les ancrages d'index.

13. Système de traitement de flux d'événements selon la revendication 8, dans lequel le dispositif de marshalling en amont est en outre configuré pour stocker des informations de mappage indiquant une relation entre l'ancrage complet et l'ancrage d'index.

14. Système de traitement de flux d'événements selon la revendication 8, dans lequel :
le dispositif de marshalling en amont reçoit l'ancrage complet de la part du processeur de calcul en amont en réponse à une demande de données de la part du dispositif de marshalling en amont ; et
le dispositif de marshalling en amont est en outre configuré pour recevoir un lot de données demandé avec l'ancrage complet.

15. Système de traitement de flux d'événements selon la revendication 8, dans lequel :
le dispositif de marshalling en amont transmet l'ancrage d'index au dispositif de marshalling en aval en réponse à une demande de données provenant du dispositif de marshalling en aval ; et
le dispositif de marshalling en amont est en outre configuré pour envoyer des données demandées au dispositif de marshalling en aval avec l'ancrage d'index.
